# EUROPEAN PATENT SPECIFICATION

(11) **EP 1 520 386 B1**
(45) Date of publication and mention of the grant of the patent: **02.08.2006**
(21) Application number: 02722212.4
(22) Date of filing: 11.03.2002
(51) Int. Cl.: H04L 29/06, H04M 7/00

(54) **CODING FOR DATA IN A DATA PACKAGE**
KODIEREN VON DATEN EINES DATENPAKETS
CODAGE DE DONNEES DANS UN ENSEMBLE DE DONNEES

(43) Date of publication of application: 06.04.2005
(73) Proprietor: TELEFONAKTIEBOLAGET LM ERICSSON (publ), 164 83 Stockholm (SE)
(72) Inventor: JENSEN, Frithiof, DK-8543 Hornslet (DK)
(74) Representative: Tonscheidt, Andreas
(86) International application number: PCT/EP2002/002751
(87) International publication number: WO 2003/077499

(56) References cited:
- LU G: "Issues and technologies for supporting multimedia communications over the Internet" COMPUTER COMMUNICATIONS, ELSEVIER SCIENCE PUBLISHERS BV, AMSTERDAM, NL, vol. 23, no. 14-15, 30 August 2000 (2000-08-30), pages 1323-1335, XP004209383 ISSN: 0140-3664
- HOUGHTON T F ET AL: "A PACKET TELEPHONY GATEWAY FOR PUBLIC NETWORK OPERATORS" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, vol. 2, 21 September 1997 (1997-09-21), pages 35-44, XP000704453
- WALLBAUM M ET AL: "VOICE/DATA INTEGRATION IN WIRELESS COMMUNICATION NETWORKS" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, vol. 5 CONF. 50, 19 September 1999 (1999-09-19), pages 2651-2655, XP000922237 ISBN: 0-7803-5436-2

## Description

### TECHNICAL FIELD OF THE INVENTION

This invention relates to a method of coding data in a data package which is included in a data stream, the data package containing information on a source of origin and a destination for the data package, wherein the coding takes place in a coding system containing a plurality of coding algorithms, and further relates to a circuit for coding said data as mentioned.

### DESCRIPTION OF RELATED ART

The encoding/decoding of data in a data stream, for example voice data in an Internet Protocol package (VoIP), takes place by use of an encoder/decoder (CODEC) device in form of a Digital Signal Processor. A voice CODEC device generally requires significant processing power as well as storage of substantial amounts of state information associated with the voice data stream.
Telephone communication via Internet or Local Area Networks (LAN) is an increasingly common phenomenon, which requires that analogue data, such as speech, can be transmitted reliably and efficiently across network boundaries. An example of an Internet Protocol is User Diagram Protocol (UDP), which is primarily used for broadcasting of messages over a network. UDP provides no guarantee of delivery, does nothing to avoid congestion, and makes no guarantees about the rate or order in which packages will arrive.
Typically, a Media Gateway resides on the edge of a Public Switched Telephone Network (PSTN) and an Internet Protocol (IP) network. The Media Gateway has two endpoints each adapted to a network. If the Media Gateway resides between a PSTN and an IP network, one endpoint would comprise an E1 Interface for the PSTN and the other endpoint would comprise an IP Interface for the IP network.

In the Internet telephony architecture, the Media Gateway device performs the translation between networks, using a number of encoder/decoder devices to translate analogue voice data into a package-based digital representation of the data. The Media Gateway terminates encoded media streams, e.g. voice encoded according to the standardized G.711 coding algorithm. A prominent feature of a Media Gateway is its ability to support a range of CODEC's and to allow media transcoding between these.
Each CODEC device is uniquely adapted to the type of signal it processes and the characteristics of the network, thus many different CODEC's may be required to implement a Media Gateway. Functions as echo cancellation, gain control, silence detection, fax tone detection, etc., are also likely to be part of the capability set of a Media Gateway. Additionally, CODEC devices may be implemented as Software Modules, Dedicated Hardware or any combination thereof.

A Media Gateway is typically processing a plurality of data streams multiplexed in time. This requires the ability of shifting between CODEC's appropriate for coding the incoming data. Presently, if the CODEC implementation is operating in the context of a Realtime Operating System, the Operating System will force the rescheduling of multiple processes at regular intervals. When shifting from one process to another, the scheduling process forces the microprocessor to flush the fast and efficient cache memory, after which the processor has to preload new data into the cache memory space for use by the forthcoming task.
This flushing of data is very ineffective due to waste of processing time, which calls for an amount of processing overhead by the processor. This method makes the processor exceedingly dependent on the access time and latency time of the usual slower external memory, as this will dramatically decrease the performance of the real-time processor. At heavy data load, the processor possibly may not be able to keep up a steady rhythm of processing, which introduces data under run or loss of information or even worse, lead into processor stalling (e.g. no data will be processed at all).

Encoding/decoding of multimedia communications over the Internet is disclosed by Lu G. in ' Issue and technologies for supporting multimedia communications over the Internet' [COMPUTER COMMUNICATIONS, ELSEVIER SCIENCE PUBLISHERS BV, AMSTERDAM, NL, vol. 23, no. 14-15, 30. August 2000, pages 1323-1335, ISSN 0140-3664].

An object of the present invention is to provide an efficient utilization of processor resources during coding of a packetized data stream by handling the data stream in a more efficient way and to optimize the scheduling of processing between several data streams and the access to a CODEC state information in order to improve overall throughput of a Media Gateway device.

### SUMMARY OF THE INVENTION

In accordance with the present invention there is provided a method in which an identification system attaches information to the data package, whereby the information is generated from the information on the source of origin of the data package and its destination by a managing system, and the coding system utilizes said attached information to select one of a plurality of coding algorithms, and the coding system codes data derived from said data package according to the selected coding algorithm. This reduces the time needed for the coding system to retrieve said selected coding algorithm and with that release more processing time for the coding system to perform the actual data coding.

A method as described above where said data stream is included in a network where the data is packetized in a finite size prior to information attachment.

By use of Internet Protocol packetized data, the data package is marked with a source of origin and destination that eliminates the need for generating said source of origin and destination.

If the sources of origin and destination comprise Internet protocol addresses, the coding system does not have to evaluate if the internal address look-up is in vain.

If one of said coding algorithms contained in the coding system is of a type that can be coded in a Global System for Mobile Communications (GSM) system, the coding system will be able to code respective data without the need of acquiring the said algorithm.

If one of said coding algorithms contained in the coding system is of a type that can be coded in a Universal Mobile Telecommunication Standard (UMTS) system, the coding system will be able to code respective data without the need for acquiring said algorithm.

If one of said coding algorithms contained in the coding system is of a type that can be coded in a PSTN system, the coding system will be able to code respective data without the need for acquiring said algorithm.

Further, if said information is provided in an Interface Agent, the coding system has fewer tasks and therefore a higher processing limit.

As mentioned, the invention further relates to a circuit in which the circuit comprises means for attaching an identification mark to a data package, whereby said mark is generated from said information on the source of origin of the data package and its destination by a means for managing; and means for subsequently selecting one of said plurality of coding algorithms from said attached identification mark; and means coding said data according to said selected coding algorithm. This reduces the time needed for the circuit to retrieve said selected coding algorithm and with that provide more processing time for the circuit to perform the actual data coding.

A circuit as described above where said data stream is included in a network where the data is packetized in a finite size prior to the information mark attachment.

By use of Internet Protocol packetized data, the data package is marked with a source of origin and destination that eliminates the need for generating said source of origin and destination.

If the source of origin and destination comprise Internet protocol addresses the coding system does not have to evaluate if the internal address look-up is in vain.

If one of said coding algorithms contained in the coding system is of a type that can be coded in a GSM system, the coding system will be able to code respective data without the need for acquiring said algorithm.

If one of said coding algorithms contained in the coding system is of a type that can be coded in a UMTS system, the coding system will be able to code respective data without the need for acquiring said algorithm.

If one of said coding algorithms contained in the coding system is of a type that can be coded in a PSTN system, the coding system will be able to code respective data without the need for acquiring said algorithm.

Further, if said identification mark is provided in an Interface Agent, the coding system has fewer tasks and therefore a higher processing limit.

### BRIEF DESRCIPTION OF THE DRAWINGS

The accompanying drawings illustrate the present invention by way of the embodiments in which:
Fig. 1 is a schematic block diagram illustrating the relationship between major elements of the invention;
Fig. 2 is a schematic block diagram showing the basic data handling in the embodiment of the present invention where the data flow direction is from unpacketized streaming data to packetized data;
Fig. 3 is a detailed block diagram of a data stream during processing according to the present invention where the stream destination is a packetized medium;
Fig. 4 is a schematic block diagram showing the basic data handling in a embodiment of the present invention where the data flow direction goes from packetized data to unpacketized streaming data; and
FIG. 5 is a detailed block diagram of a data stream during processing according to the present invention wherein the stream destination is a unpacketized medium.

### DETAILED DESCRIPTION OF EMBODIMENTS

By use of a Digital Signal Processor, DSP, which may not have support for a Real-time Operation System, this flushing of data at regular and improper intervals will be eliminated by a Package-Driven Architecture for data stream processing being defined. This architecture schedules data stream processing by attaching instructions to each data stream package describing the processing required by the given data package.
As dedicated Digital Signal Processors are simple and optimized for performance and not task switching, it is an alternative to use a DSP as Central Processing Unit in said coding system.

In a preferred embodiment, a Stream Manager makes the decision what CODEC the DSP will use for coding. The Stream Manager has access to a permanent digital data medium comprising a plurality of available CODEC interfaces. On system start-up the CODEC algorithms available to the Stream Manager will be uploaded into the memory of the DSP, either partially or fully. The algorithms will be sorted in banks, wherein each bank only one CODEC is available. The banks are selectable by the Stream Manager and the DSP does not have the ability to choose which bank to select, but can only access the CODEC data of the bank currently selected by the Stream Manager. When a data stream processed by the Stream Manager requires a CODEC for coding, the Stream Manager has knowledge about the specific CODEC required. This knowledge is typically based on the source of origin (PSTN/GSM/IP address etc.) and/or the destination address of the data, but can also be based on for example common used communication standards.
When the appropriate coding for a given data stream is known, the Stream Manager indexes the memory area of the DSP where the CODEC is stored. The Stream Manager will enable that particular bank so that the DSP will load the chosen CODEC upon coding the data comprised in said data stream.
The coding system may comprise means to receive new types of CODEC's. This property of the coding system is beneficial if a data package arrives that may require a CODEC that is not available to the Stream Manager. The coding system may store the new CODEC permanently on the storage medium available to the Stream Manager, which after the Stream Manager may upload the said CODEC in the memory available to the DSP. Additionally it is preferred that the coding system comprises means to delete a CODEC from the storage medium to free storage space.

The figures illustrate the invention, viz. a system for improving processor performance in a data stream processing system, for example voice data in a media stream.

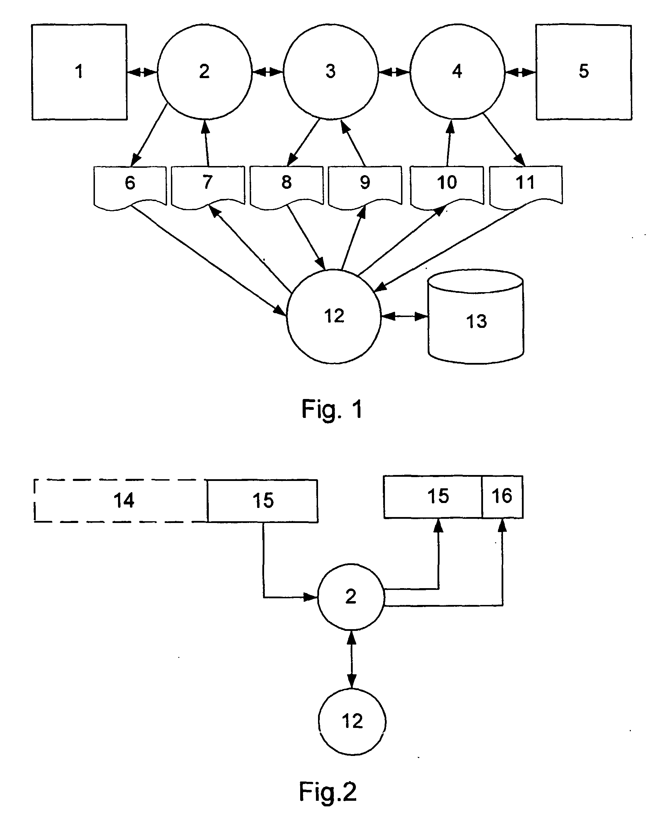

Fig. 1 illustrates the data flow from one endpoint E1 Interface 1 to a second endpoint IP/UDP Interface 5 through a system architecture and vice versa, which will be described in details in the following.

The E1 Interface 1 is adapted to an encoded media stream, e.g. G.711 encoded voice data from a PSTN telephone switch-signalling gateway. An E1 Interface Agent 2 creates a fixed-size package within an assigned time slot and transmits the current processed time slot information 6 regarding the package to a Stream Manager 12. On request the Stream Manager 12 is able to upload CODEC's from the CODEC storage device 13 to the Media Mapper 3. The Stream Manager 12 generates a Stream ID 7 based upon the time slot information 6 and sends the Stream ID 7 back to the E1 Interface Agent 2, which tags the current fixed-size package with the processing code, Stream ID 7.
The tagged package is sent to the Media Mapper 3, which upon receiving the data package sends the Stream ID 8, which is identical with above-mentioned Stream ID 7, to the Stream Manager 12. The Stream Manager 12 enables the CODEC information 9 appropriate for coding the media data stream package in the Media Mapper 3. When the Media Mapper 3 has coded the media stream as prescribed, the data package is sent to the IP Interface Agent 4. The IP Interface Agent will now generate the information required to form an IP package. The data package will be wrapped into an IP package with the corresponding destination address required by the network protocol. The data package is sent to its destination via the IP/UDP Interface 5.

By receiving a coded media package from the IP/UDP Interface 105 to make the way to a E1 network the method is nearly identical to the first description but in opposite direction. An IP package arrives at the IP/UDP Interface where upon the IP Interface Agent 4 recognizes the source and destination address contained in the data package. The destination address 11 is sent to the Stream Manager 12, which uses the source address information to index the processing code belonging to that given connection. The Stream Manager 12 generates a Stream ID 10 and sends this ID to the IP Interface Agent 4 where the protocol information of the data package may be stripped, and the data package is tagged with the Stream ID 10 assigned by the Stream Manager 12, and sent to the Media Mapper 3. Media Mapper 3 indexes the CODEC by way of the Stream ID 8, the Stream Manager 12, and the CODEC Information 9. The data derived from the stripped package is coded in accordance with the chosen CODEC and the package is sent to the E1 Interface Agent 2. The Stream Manager 12 indexes the transmit buffer for the E1 time slot used by the connection, and the data is finally placed in the transmit buffer of the E1 Interface 1 with respect to the found time slot.

Fig. 2 shows a detailed excerpt of the data stream 14 as it arrives the E1 Interface agent 2. The data stream 14, which can be a continuous stream of any digital signal, is sliced and packed in a predetermined fixed-size package 15 and tagged with a Stream ID 16 in the E1 Interface Agent 2 given by a Stream Manager 12 for subsequent recognition. The Stream Manager 12 maintains the media stream by managing the data defining the stream.

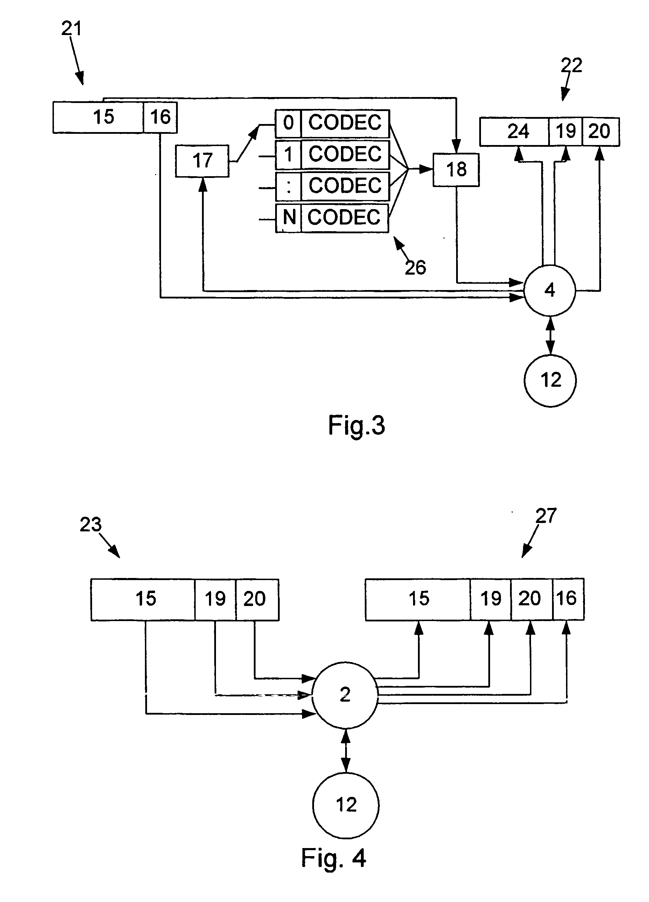

Fig. 3 shows the architecture of the present invention subsequent to the E1 Interface Agent 2 management. The data package 21 containing data 15 and an ID tag 16, is now stripped in the Media Mapper 3 where the ID tag 16 is utilized in a Indexing Mechanism 17 contained in the Stream Manager 12 to point out the memory space 26 used for the requested CODEC. The memory space can be organized in smaller fragments each with its own CODEC. The Digital Signal Processor 18 loads the chosen CODEC into the internal processing memory and codes the data 15 derived from the package 21 on the basis of the loaded CODEC contained in memory space 26. The processed data 24 is tagged with a source of origin and destination contained in the Stream Manager 12 by way of the IP Interface Agent 4 to form a valid IP package 22 after which the IP package 22 is sent to its destination through a common network interface (not shown).

Fig. 4 illustrates an incoming media stream in form of an Internet Protocol package 23 comprising voice data 15 and source of origin 19 and destination 20. The Interface Agent 2 recognizes and sends the information regarding the source of origin and destination from the data package 23 to the Stream Manager 12. Note, that the package information also can be stripped apart from the data. If the source and destination address reside on the data, a look-up in the Stream Manager 12 can subsequently be avoided and internal processing bandwidth in the Media Gateway can be reduced. The Stream Manager 12 generates a Stream ID tag, which will be sent to the Interface Agent 2 and tagged thereby to the data package 23 to form a package 27 prepared to be processed in the Media Mapper 3.

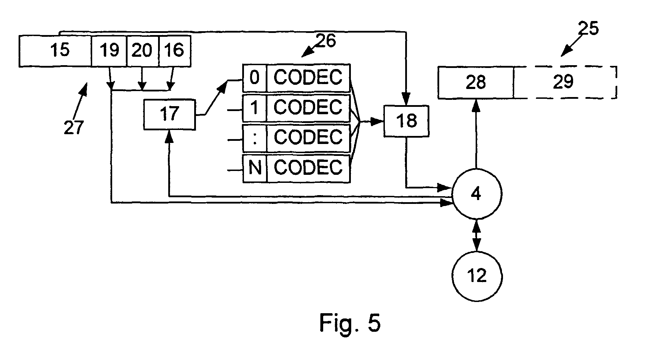

The interplay between the Media Mapper 3, the Interface Agent 4 and the Stream Manager 12 is illustrated in figure 5. The pre-processed data package 27, comprising voice data 15, source of origin 19, destination 20 and Stream ID 16, is categorized by the Stream Manager 12 by means of the Stream ID 16 and the E1 Interface Agent 4. The Stream Manager 12 has means to index the appropriate CODEC in the memory 26 accessible by the DSP 18, by use of the Indexing Mechanism 17. The DSP 18 utilizes the CODEC algorithm designated by the Indexing Mechanism 17 on coding the data 15. The DSP 18 sends the processed data to the E1 Interface Agent 4 to let the Stream Manager 12 be provided with the topical destination information 20. The Stream Manager 12 indexes the transmit buffer for the E1 time slot used by the connection by way of the destination information 20. The data 28 is finally placed in transmit buffer 29 of the E1 Interface 5 with respect to the appropriate time slot.

## Claims

1. A method of coding data (15) in a data package (23) which is included in a data stream (14),
said data package containing information on a source of origin (19) and a destination (20) for the data package, wherein
the coding takes place in a coding system (3) containing a plurality of coding algorithms (26), and wherein
an identification system (2) attaches information (16) to the data package (23), whereby said information is generated from said information on the source of origin (19) of the data package and its destination (20) by a managing system ,**characterized in that**
- the coding system (3) utilizes said attached information (16) to select one of said plurality of coding algorithms (26); and
- the coding system (3) codes said data (15) according to the selected coding algorithm.

2. A method according to claim 1, **characterized in that** said data stream (14) is included in a network.

3. A method according to claim 2, **characterized in that** said data package (23) is formed by an Internet protocol network package.

4. A method according to claim 3, **characterized in that** the source of origin (19) and the destination (20) comprise Internet protocol addresses.

5. A method according to claims 1-4, **characterized in that** at least one coding algorithm is of a type which can be coded in a GSM system.

6. A method according to claims 1-5, **characterized in that** at least one coding algorithm is of a type which can be coded in a UMTS system.

7. A method according to claims 1-6, **characterized in that** at least one coding algorithm is of a type which can be coded in a PSTN system.

8. A method according to claims 1-7, **characterized in that** said identification (16) is provided in an Interface Agent (2).

9. A circuit for coding data (15) in a data package (23) which is included in a data stream (14),
said data package containing information on a source of origin (19) and a destination (20) for the data package, said circuit containing a plurality of coding algorithms (26), said circuit comprising means (2,4) for attaching an identification mark (16) to the data package (23), whereby said mark is generated from said information on the source of origin (19) of the data package (23) and its destination (20) by a means for managing,
**characterized in that** the circuit further comprises
- means (12,17) for subsequently selecting one of said plurality of coding algorithms (26) from said attached identification mark (16); and
- means (18) for coding said data according to said selected coding algorithm.

10. A circuit according to claim 9, **characterized in that** said data stream (14) is included in a network.

11. A circuit according to claim 10, **characterized in that** said data package (23) is formed by an Internet protocol network package.

12. A circuit according to claim 11, **characterized in that** the circuit comprises means (12) for calculating Internet protocol addresses.

13. A circuit according to claims 9-12, **characterized in that** the circuit comprises a coding algorithm of a type which can be coded in a GSM system.

14. A circuit according to claims 9-13, **characterized in that** the circuit comprises a coding algorithm of a type which can be coded in a UMTS system.

15. A circuit according to claims 9-14, **characterized in that** the circuit comprises a coding algorithm of a type which can be coded in a PSTN system.

16. A circuit according to claims 9-15, **characterized in that** the circuit comprises means (12,17) for indexing a coding algorithm from an identification mark (16).

17. A circuit according to claims 9-16, **characterized in that** the circuit comprises a digital signal processor (18).

18. A media gateway for coding data (15) in a data package (23) which is included in a data stream (14),
said data package containing information on a source of origin (19) and a destination (20) for the data package, said media gateway containing a plurality of coding algorithms (26), said media gateway comprising means (2,4) for attaching an identification mark (16) to the data package (23), whereby said mark is generated from said information on the source of origin (19) of the data package (23) and its destination (20) by a means for managing,
**characterized in that** the media gateway further comprises
- means (12,17) for subsequently selecting one of said plurality of coding algorithms (26) from said attached identification mark (16); and
- means (18) for coding said data according to said selected coding algorithm.

## Patentansprüche

1. Verfahren zum Kodieren von Daten (15) in einem Datenpaket (23), das in einem Datenstrom (14) enthalten ist,
wobei das Datenpaket Informationen über eine Ursprungsquelle (19) und ein Ziel (20) für das Datenpaket enthält, wobei
das Kodieren in einem Kodierungssystem (3) erfolgt, das mehrere Kodierungsalgorithmen (26) enthält, und wobei
ein Identifikationssystem (2) eine Information (16) an das Datenpaket (23) anhängt, wobei die Information von einem Verwaltungssystem aus den Informationen über die Ursprungsquelle (19) des Datenpakets und dessen Ziel (20) erzeugt wird, **dadurch gekennzeichnet, dass**
- das Kodierungssystem (3) die angehängte Information (16) dazu einsetzt, einen der mehreren Kodierungsalgorithmen (26) auszuwählen; und
- das Kodierungssystem (3) die Daten (15) gemäß dem ausgewählten Kodierungsalgorithmus kodiert.

2. Verfahren nach Anspruch 1, **dadurch gekennzeichnet, dass** der Datenstrom (14) in einem Netz enthalten ist.

3. Verfahren nach Anspruch 2, **dadurch gekennzeichnet, dass** das Datenpaket (23) von einem Internetprotokollnetz-Paket gebildet wird.

4. Verfahren nach Anspruch 3, **dadurch gekennzeichnet, dass** die Ursprungsquelle (19) und das Ziel (20) Internetprotokolladressen umfassen.

5. Verfahren nach den Ansprüchen 1 - 4, **dadurch gekennzeichnet, dass** mindestens ein Kodierungsalgorithmus von einem Typ ist, der in einem GSM-System kodiert werden kann.

6. Verfahren nach den Ansprüchen 1 - 5, **dadurch gekennzeichnet, dass** mindestens ein Kodierungsalgorithmus von einem Typ ist, der in einem UMTS-System kodiert werden kann.

7. Verfahren nach den Ansprüchen 1 - 6, **dadurch gekennzeichnet, dass** mindestens ein Kodierungsalgorithmus von einem Typ ist, der in einem PSTN-System kodiert werden kann.

8. Verfahren nach den Ansprüchen 1 - 7, **dadurch gekennzeichnet, dass** die Identifikation (16) in einem Interface-Agenten (2) bereitgestellt wird.

9. Schaltkreis zum Kodieren von Daten (15) in einem Datenpaket (23), das in einem Datenstrom (14) enthalten ist,
wobei das Datenpaket Informationen über eine Ursprungsquelle (19) und ein Ziel (20) für das Datenpaket enthält, wobei der Schaltkreis mehrere Kodierungsalgorithmen (26) enthält,
wobei der Schaltkreis Mittel (2, 4) zum Anhängen eines Identifikationszeichens (16) an das Datenpaket (23) umfasst, wobei das Zeichen von einem Mittel zum Verwalten aus den Informationen über die Ursprungsquelle (19) des Datenpakets (23) und dessen Ziel (20) erzeugt wird,
**dadurch gekennzeichnet, dass** der Schaltkreis weiterhin Folgendes umfasst:
- Mittel (12, 17) zum anschließenden Auswählen eines der mehreren Kodierungsalgorithmen (26) aus dem angehängten Identifikationszeichen (16) und
- Mittel (18) zum Kodieren der Daten gemäß dem ausgewählten Kodierungsalgorithmus.

10. Schaltkreis nach Anspruch 9, **dadurch gekennzeichnet, dass** der Datenstrom (14) in einem Netz enthalten ist.

11. Schaltkreis nach Anspruch 10, **dadurch gekennzeichnet, dass** das Datenpaket (23) von einem Internetprotokollnetz-Paket gebildet wird.

12. Schaltkreis nach Anspruch 11, **dadurch gekennzeichnet, dass** der Schaltkreis ein Mittel (12) zum Errechnen von Internetprotokolladressen umfasst.

13. Schaltkreis nach den Ansprüchen 9 - 12, **dadurch gekennzeichnet, dass** der Schaltkreis einen Kodierungsalgorithmus eines Typs umfasst, der in einem GSM-System kodiert werden kann.

14. Schaltkreis nach den Ansprüchen 9 - 13, **dadurch gekennzeichnet, dass** der Schaltkreis einen Kodierungsalgorithmus eines Typs umfasst, der in einem UMTS-System kodiert werden kann.

15. Schaltkreis nach den Ansprüchen 9 - 14, **dadurch gekennzeichnet, dass** der Schaltkreis einen Kodierungsalgorithmus eines Typs umfasst, der in einem PSTN-System kodiert werden kann.

16. Schaltkreis nach den Ansprüchen 9 - 15, **dadurch gekennzeichnet, dass** der Schaltkreis Mittel (12, 17) zum Indexieren eines Kodierungsalgorithmus aus einem Identifikationszeichen (16) umfasst.

17. Schaltkreis nach den Ansprüchen 9 - 16, **dadurch gekennzeichnet, dass** der Schaltkreis einen digitalen Signalprozessor (18) umfasst.

18. Media-Gateway zum Kodieren von Daten (15) in einem Datenpaket (23), das in einem Datenstrom (14) enthalten ist,
wobei das Datenpaket Informationen über eine Ursprungsquelle (19) und ein Ziel (20) für das Datenpaket enthält, wobei der Media-Gateway mehrere Kodierungsalgorithmen (26) enthält, wobei der Media-Gateway Mittel (2, 4) zum Anhängen eines Identifikationszeichens (16) an das Datenpaket (23) umfasst, wobei das Zeichen von einem Mittel zum Verwalten aus den Informationen über die Ursprungsquelle (19) des Datenpakets (23) und dessen Ziel (20) erzeugt wird,
**dadurch gekennzeichnet, dass** der Media-Gateway weiterhin Folgendes umfasst:
- Mittel (12, 17) zum anschließenden Auswählen eines der mehreren Kodierungsalgorithmen (26) aus dem angehängten Identifikationszeichen (16) und
- Mittel (18) zum Kodieren der Daten gemäß dem ausgewählten Kodierungsalgorithmus.

## Revendications

1. Procédé de codage de données (15) en un paquet de données (23) qui est inclus dans un flux de données (14),
ledit paquet de données contenant une information relative à une source d'origine (19) et une destination (20) du paquet de données, moyennant quoi le codage a lieu dans un système de codage (3) contenant une pluralité d'algorithmes de codage (26) et moyennant quoi
un système d'identification (2) attache l'information (16) au paquet de données (23), moyennant quoi ladite information est générée à partir de ladite information relative à la source d'origine (19) du paquet de données et sa destination (20) par un système de administration, **caractérisé en ce que**
- le système de codage (3) utilise ladite information attachée (16) pour sélectionner un de ladite pluralité d'algorithmes de codage (26) ;
- le système de codage (3) code lesdites données (15) en fonction de l'algorithme de codage sélectionné.

2. Procédé selon la revendication 1, **caractérisé en ce que** ledit flux de données (14) est inclus dans un réseau.

3. Procédé selon la revendication 2, **caractérisé en ce que** ledit paquet de données (23) est formé par un paquet de réseau à protocole Internet.

4. Procédé selon la revendication 3, **caractérisé en ce que** la source d'origine (19) et la destination comprennent des adresses de protocole Internet.

5. Procédé selon les revendications 1 à 4, **caractérisé en ce que** au moins un algorithme de codage est d'un type qui peut être codé dans un système GSM.

6. Procédé selon les revendications 1 à 5, **caractérisé en ce que** au moins un algorithme de codage est d'un type qui peut être codé dans un système UMTS.

7. Procédé selon les revendications 1 à 6, **caractérisé en ce que** au moins un algorithme de codage est d'un type qui peut être codé dans un système PSTN.

8. Procédé selon les revendications 1 à 7, **caractérisé en ce que** ladite identification (16) est fournie dans un agent d'interface (2).

9. Circuit de codage de données (15) en un paquet de données (23) qui est inclus dans un flux de données (14),
ledit paquet de données contenant une information concernant une source d'origine (19) et une destination (20) du paquet de données, ledit circuit contenant une pluralité d'algorithmes de codage (26),
ledit circuit comprenant un moyen (2,4) pour attacher une marque d'identification (16) au paquet de données (23), moyennant quoi ladite marque est générée à partir de ladite information relative à la source d'origine (19) du paquet de données (23) et sa destination (20) par un moyen de administration,
**caractérisé en ce que** le circuit comprend en outre
- un moyen (12,17) pour sélectionner ensuite un de ladite pluralité d'algorithmes de codage (26) à partir de ladite marque d'identification attachée (16) ; et
- un moyen (18) pour coder lesdites données en fonction dudit algorithme de codage sélectionné.

10. Circuit selon la revendication 9, **caractérisé en ce que** ledit flux de données (14) est inclus dans un réseau.

11. Circuit selon la revendication 10, **caractérisé en ce que** ledit paquet de données (23) est formé par un paquet de réseau à protocole Internet.

12. Circuit selon la revendication 11, **caractérisé en ce que** le circuit comprend un moyen (12) pour calculer des adresses de protocole Internet.

13. Circuit selon les revendications 9 à 12, **caractérisé en ce que** le circuit comprend un algorithme de codage d'un type qui peut être codé dans un système GSM.

14. Circuit selon les revendications 9 à 13, **caractérisé en ce que** le circuit comprend un algorithme de codage d'un type qui peut être codé dans un système UMTS.

15. Circuit selon les revendications 9 à 14, **caractérisé en ce que** le circuit comprend un algorithme de codage d'un type qui peut être codé dans un système PSTN.

16. Circuit selon les revendications 9 à 15, **caractérisé en ce que** le circuit comprend un moyen (12,17) pour indexer un algorithme de codage à partir d'une marque d'identification (16).

17. Circuit selon les revendications 9 à 16, **caractérisé en ce que** le circuit comprend un processeur de signal numérique (18).

18. Passerelle média pour coder des donnés (15) en un paquet de données (23) qui est inclus dans un flux de données (14),
ledit paquet de données concernant une information relative à une source d'vrigine (19) et une destination (20) du paquet de données, ladite passerelle média contenant une pluralité d'algorithmes de codage (26), ladite passerelle média comprenant un moyen (2,4) pour attacher une marque d'identification (16) au paquet de données (23), moyennant quoi ladite marque est générée à partir de ladite information relative à la source d'origine (19) du paquet de données (23) et sa destination (20) par un moyen de administration,
**caractérisé en ce que** la passerelle média comprend en outre
- un moyen (12,17) pour sélectionner ensuite un de ladite pluralité d'algorithmes de codage (26) à partir de ladite marque d'identification attachée (16) ; et
- un moyen (18) pour coder lesdites données en fonction dudit algorithme de codage sélectionné.
